# EUROPEAN PATENT SPECIFICATION

(11) **EP 2 710 071 B1**
(45) Date of publication and mention of the grant of the patent: **22.04.2015**
(21) Application number: 12725640.2
(22) Date of filing: 07.05.2012
(51) Int. Cl.: C08L 23/02, C08K 5/13, C08K 5/00

(54) **COLOURING COMPOSITION FOR THERMOPLASTIC POLYMERS AND PROCESS OF PREPARING AND USING SAME**
FÄRBUNGSZUSAMMENSETZUNG FÜR THERMOPLASTISCHE POLYMERE UND VERFAHREN ZU IHRER HERSTELLUNG UND VERWENDUNG
COMPOSITION COLORANTE POUR POLYMÈRES THERMOPLASTIQUES ET SON PROCÉDÉ DE PRÉPARATION ET D'UTILISATION

(30) Priority: 19.05.2011 EP 11166758
(43) Date of publication of application: 26.03.2014
(73) Proprietor: Trading and Marketing Consultants Palmarole AG, 4011 Basel (CH)
(72) Inventor: GUERANI, Giampaolo, I-01100 Viterbo (IT); PALMAROLE, Gerard, FR-68480 Bettlach (FR)
(74) Representative: Zanoli, Enrico
(86) International application number: PCT/EP2012/058376
(87) International publication number: WO 2012/156226

(56) References cited:
- EP-A1- 0 443 328
- EP-A1- 2 192 147
- US-A- 5 190 710
- US-A1- 2002 099 126

## Description

The present invention relates to a colouring composition for thermoplastic polymers and to a process of preparing and using same. More particularly the present invention relates to a colouring composition for colouring polyolefins, to a process of preparing such colouring composition and to a process of using such composition to colour polyolefins.

The invention relates also to a polymer masterbatch comprising said colouring composition. Thermoplastic polymers are typically coloured by using pigments or dyes.

Pigments consist typically of crystals or crystal agglomerates of organic or inorganic compounds which need to be very well dispersed in the polymer to avoid drawbacks like filter occlusion during processing. The resulting coloured polymer, however, looks opaque since pigments are generally unable to give a brilliant and lustrous appearance, as it would be desirable. Moreover, the incorporation of pigments into plastics might adversely impact the physical properties of plastics.

Use of conventional dyestuff to colour thermoplastic polymers is difficult, particularly to colour polyolefins, which are hydrophobic and lack sites to which dye molecules may link. If a conventional dyestuff is employed, water resistance, oil resistance and the migration of the dyestuff may be disadvantageously inadequate.

US 2003/0019054 seeks to circumvent diffusion to the surface of the material by employing blends of dyes, each at a very low concentration. However, this does not solve the problem of easy extraction and still restricts the total concentration of dyes.

Adding a third component to the composition, either as a separate addition to dye and polymer, or as part of compounds with the dye prior to the addition to the polymer, has also been proposed in order to improve the colour properties of the material, especially the dye uptake and washing fastness/migration.

US 2007/0104952 describes use of particles of alumina hydrate as a third component. The alumina hydrate is mixed with the dye in hot water, and after drying and milling, the powder is melt compounded with the polymer. The result is a coloured pigment of alumina hydrate and dye within the polymer material. Such pigments are not, as previously stated, suitable to give a good brilliancy of colour to the polymer.

US 5,938,828 teaches that acidic dyes can be reacted with ammonium salts to form quaternary ammonium complexes with the anionic dye, and subsequently used in polypropylene. Formation and corresponding use of other ammonium complexes are taught in CA 854618. However, in these cases the dye has to be modified prior to use by a rather long and complex process. Furthermore, ammonium salts generally have low heat stability, thus a problem expected when using these complexes mixed with thermoplastic polymer materials is that at least a partial decomposition occurs at the usual elevated temperature of industrial extrusion and melt forming processes, thus producing e.g. ammonia. Also, recovering the modified dyes by evaporation of water is likely to cause formation of undesired agglomerates.

US 5998565 describes modification of dendrimers and use of these to react further with dyes to obtain products suitable to colour polymers. A significant amount of dendrimers compared to the dye is required, which is not desirable since dendrimers are relatively expensive. Moreover, the properties of the polymer might suffer if more than 1 wt% of dendrimers is added. Also, the process described is complex and time-consuming.

US 3,455,430 describes impregnation of dyes into polypropylene containing Ni amine and acetates. The dye uptake was increased by the presence of Ni amine. However, Ni compounds are not considered generally suitable in a polymer for health and erivironmental reasons, and in addition this has some colour in itself which may be unsuitable.

Compounds consisting essentially of dye molecules which have been attached to polysiloxane nanoparticles are described in WO 2007/147742 and WO 2008/138726. One of the many indicated uses of such products are in plastic materials. The dyed nanoparticles are added directly into the polymer or built into alumina- or silica-based large particles before being used. In the latter case, they have the same disadvantages of pigments. In the former case, the particulate material which is very difficult to handle and mix into the very viscous polymer materials.

US 2009/0312465 discloses systems and compositions for colour stabilization of polymer. The compositions include an antioxidant blend that may extend the colour and clarity of a thermoplastic polymer exposed to elevated temperatures. The antioxidant blend may comprise a zinc dithiocarbamate, a phenolic and a thioether. In an embodiment a propylene composition includes from 0.1 to 1% of said antioxidant blend. This document, however, does not disclose if the polymer is coloured with any colouring agent, how the polymer is coloured and which colouring agents - if any - are used.

EP 443328 A1 discloses a multi-component stabilizer system for polyolefins pigmented with phthalocyanine pigments. There is no description of a reaction of the pigment with the stabilizer additives.

US 5,190,710 discloses a method for imparting improved discoloration resistance to articles. Also in this case there is no description of a reaction of the pigment with the stabilizer additives. Moreover, the disadvantages associated to the use of pigments instead of dyes has been discussed above.

US 2002/099126 A1 discloses pigments pre-treated with organo-phosphoric acids and their salts. There is no disclosure of use of the additives according to the present invention. Also, the disadvantages associated to the use of pigments instead of dyes has been discussed above. Thus, the need is felt for a colouring composition for thermoplastic polymers that overcomes or reduces the drawbacks of conventional systems used to colour thermoplastic polymers, in particular polyolefins.

Therefore the present invention relates to a colouring composition for thermoplastic polymers characterized by comprising the reaction product of one or more dyes with one or more polymer additives, wherein said dye is an organic molecule containing at least one chromophore group, and said polymer additive is selected from one or more of the following classes:
(A) an aromatic phosphate metal salt of formula (I) 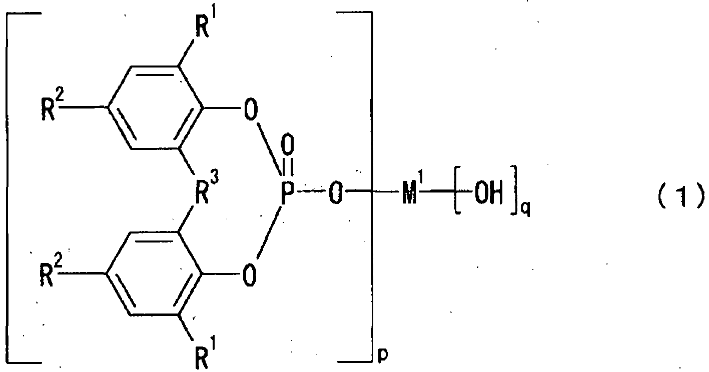 wherein:
   R¹ is C₄₋₈ alkyl group;
   R² is H or a C₁₋₈ alkyl group;
   R³ is a C₁₋₄ alkylidene group;
   M¹ is an alkaline metal atom and p is 1 and q is 0; or M¹ is an alkaline-earth-metal atom and p is 2 and q is 0; or M¹ is an aluminium atom and p is 1 or 2 and q is 3-p;.
(B) a hindered phenol antioxidant;
wherein the weight ratio between said dye and said additive is from 0.01 to 500.

The invention relates also to a process for preparing the colouring composition defined above, characterized by reacting a dye as defined above with one or more polymer additives belonging to the classes (A) and (B) as defined above, in which said reaction is carried out in an aqueous phase or in an essentially water-free phase at a temperature from 50°C to a temperature below the decomposition temperature of said dye.

The invention relates also to the use of the colouring composition defined above to colour a thermoplastic polymer by adding said colouring composition to a thermoplastic polymer, melting said polymer and mixing it with said colouring composition.

Any dye comprising an organic molecule containing at least one chromophore group and being capable to form a reaction product with one or more polymer additives belonging to the classes (A) and (B) as defined above is suitable to form a colouring composition according to the present invention. Although not wanting to be bound by any particular theory, it is believed that the reaction between the dye and the polymer additive occurs when the dye molecule contains at least one polar group.

Organic molecules with chromophore group(s) and at least one polar group fulfilling the definition of dye according to the invention have a molecular weight Mw of 250 - 3,000 g/mol, preferably 300 - 1,500 g/mol, more preferably from 350 - 800 g/mol. Such molecules are soluble or dispersible in water.

Not limiting examples of such dyes include molecules belonging to the following classes: anthraquinone, indigo, diaryl- or triarylmethane, azine, oxazine, thiazine, polymethine, quinophthalones, hydrazone, monoazo, disazo or polyazo, quinacridones, formazane, sulfur dyes, and azomethine.

The anthraquinone class of dyes is preferred. They have the following structure : 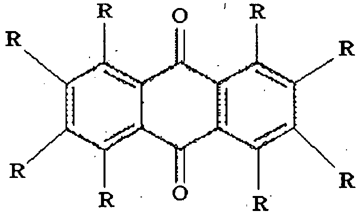 wherein R is a C₁₋₂₀ alkyl, aryl, alkylaryl, arylalkyl, substituted or unsubstituted; or amino, or a group linked to the anthraquinone backbone by atoms of o, S, N, Halogen. Examples of such groups are sulfo or nitro groups substituted or unsubstituted.

Examples of suitable anthraquinone dyes are:

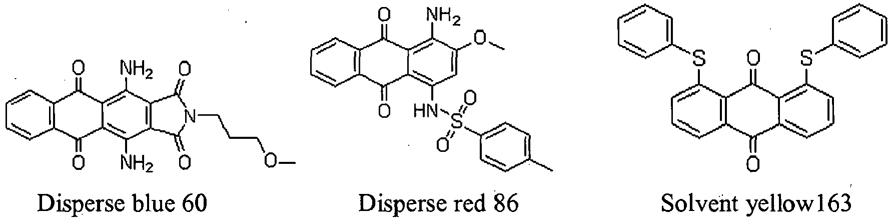

Polymer additive (A) consisting of an aromatic phosphate metal salt of formula (I) is described in US 2010/0204374 A1. Such polymer additive exhibits, alone or preferably in combination with a salt of a fatty acid, a nucleating effect or a crystallization promotion effect on thermoplastic polymers, in particular on polyolefins such as polyethylene, polypropylene or polybutene-1.

In the aromatic phosphate metal salt (A) of general formula (1) examples of the C₄₋₈ alkyl group R¹ are butyl, secondary butyl, tertiary butyl, pentyl, tertiary pentyl, hexyl, cyclohexyl, heptyl, octyl, isooctyl and tertiary octyl.

Examples of the C₁₋₈ alkyl group R² are methyl, ethyl, propyl, isopropyl, butyl, secondary butyl, tertiary butyl, pentyl, tertiary pentyl, hexyl, cyclohexyl, heptyl, octyl, isooctyl and tertiary octyl.

Examples of the C₁₋₄ alkylidene group R³ are methylene, ethylidene, propylidene and butylidene.

Examples of the metals represented by M¹ include alkali metals such as lithium, sodium or potassium, alkaline earth metals such as magnesium or calcium, and aluminium. Among these aluminium is preferred.

Examples of a method for producing the aromatic phosphate metal salt of formula (1) include a method in which a cyclic phosphoric acid with a corresponding structure and a metal compound such as a metal hydroxide, metal oxide, metal halide, metal sulphate, metal nitrate and metal alkoxide are allowed to react using, as necessary, a reagent such as a basic compound; a method in which an alkali metal salt of a cyclic phosphate with a corresponding structure and, a metal compound such as a metal hydroxide, metal oxide, metal halide, metal sulphate, metal nitrate and metal alkoxide are subjected to a salt exchange reaction using, as necessary, a reagent; and a method in which cyclic phosphorus oxychloride is used as a starting substance to generate cyclic phosphoric acid by hydrolysis and is allowed to react with a metal compound.

More specific examples of the compound represented by the general formula (1) in which M¹ is an alkali metal include the following compounds Nos. 1 to 8.

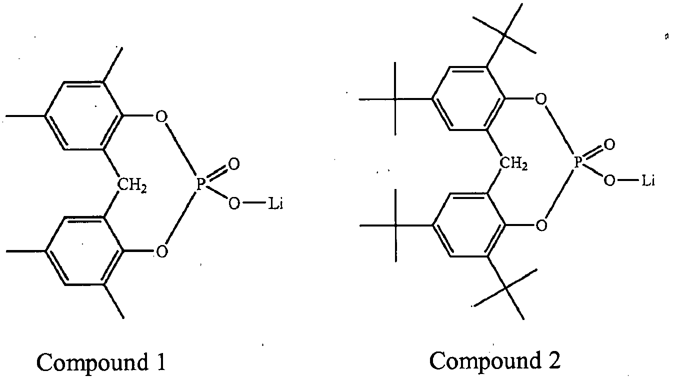

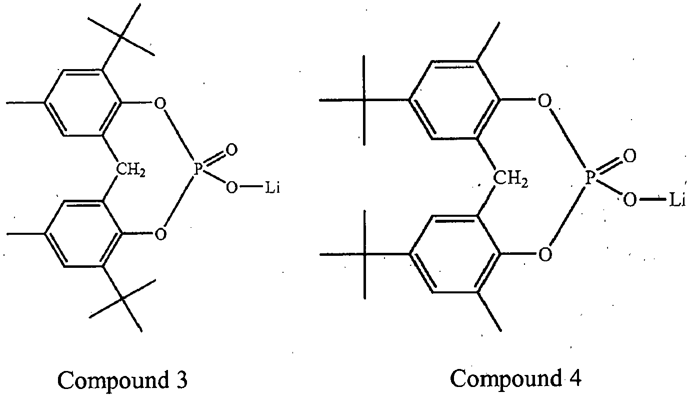

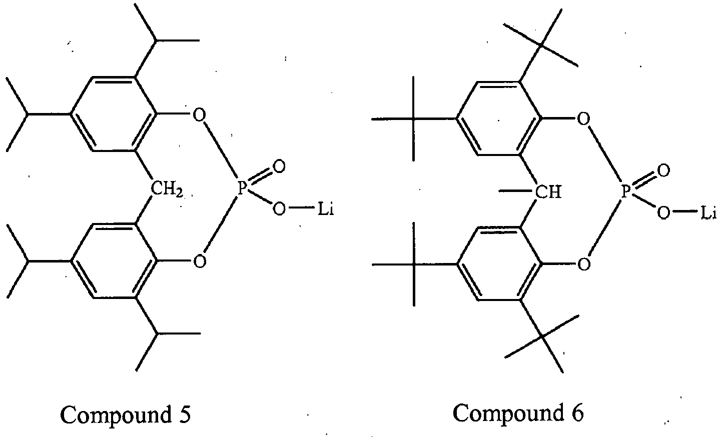

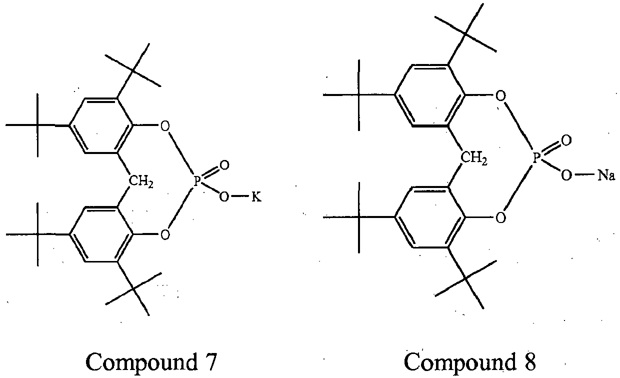

Examples of compounds of the general formula (1) in which M¹ is an alkali earth metal include the following compounds Nos. 9 to 12:

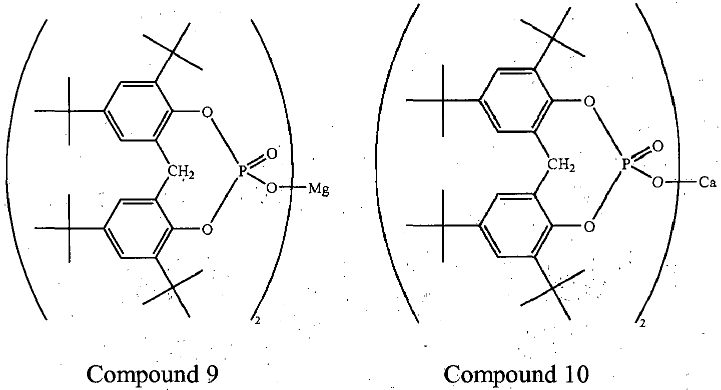

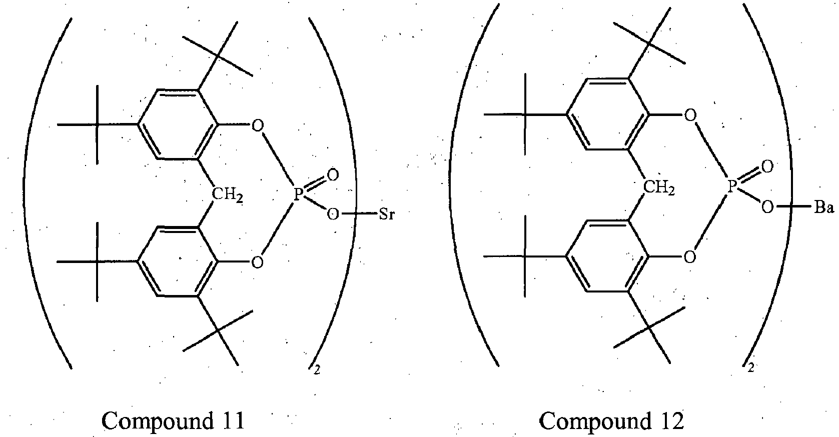

Examples of compounds of the general formula (1) in which M¹ is an aluminium atom include the following compounds Nos. 13 to 16:

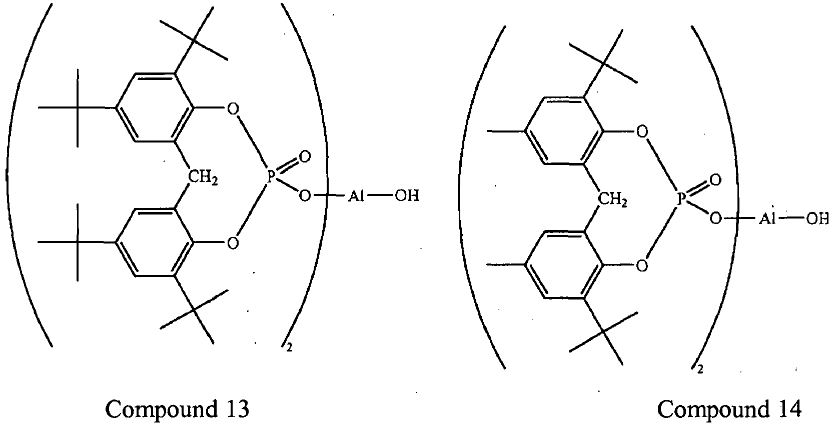

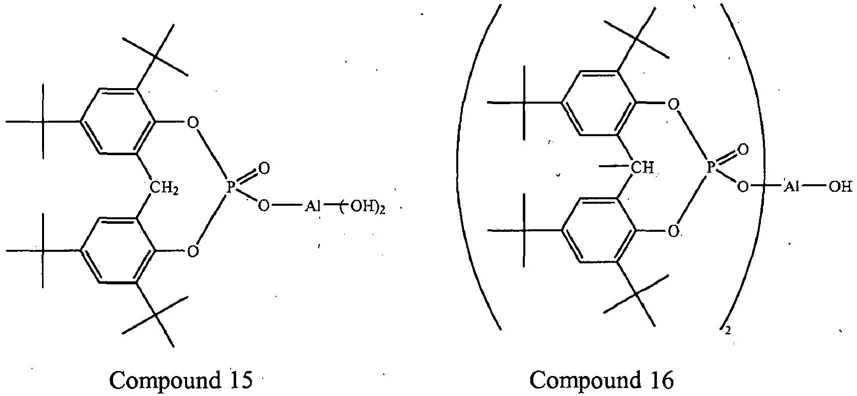

The most preferred compound is Compound 16.

Polymer additive (B) is a hindered phenol antioxidant. Hindered phenols (HP) are primary antioxidants for thermoplastic polymers and exert a radicals scavenging action. They are widely used as components of stabilization packages for plastics to inhibit oxidative processes and degradation of polymers during their life cycles, in particular during fabrication processes in which polymers undergo severe temperature and pressure conditions, as well as chemical and physical attack from the environment.

Hindered phenols contain one or more aromatic rings substituted with bulky moieties, as it is known to a person skilled in the art. Examples of HP are: 2,6-di-tert-butyl-p-cresol, 2,6-diphenyl-4-octadesiloxyphenol, distearyl(3,5-di-tert-butyl-4-hydroxybenzyl)phosphonate, 1,6-hexamethylenebis[(3,5-di-tert-butyl-4-hydroxyphenyl) propionic acid amide], 4,4'-thiobis(6-tert-butyl-m-cresol), 2,2'-methylenebis(4-methyl-6-tert-butylphenol), 2,2'-methylenebis (4-ethyl-6-tert-butylphenol), 4,4'-butylidenebis(6-tert-butyl-m-cresol), 2,2'-ethylidenebis(4,6-ditert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris (2,6-dimethyl-3-hydroxy-4-tert-butylbenzyl) isocyanurate, 1,3,5-tris(3,5-di-tert-butyl-4-hydroxybenzyl) isocyanurate, 1,3,5-tris (3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl (3,5-di-tert-butyl-4-hydroxyphenyl)propionate, thiodiethylene glycol bis[(3,5-di-tert-butyl-4-hydroxyphenyl) propionate], 1,6-hexamethylenebis [(3,5-di-tert-butyl-4-hydroxyphenyl)propionate], bis [3,3-bis(4-hydroxy-3-tert-butylphenyl)butyric acid] glycol ester, bis [2-tert-butyl-4-methyl-6-(2-hydroxy-3-tert-butyl-5-methylbenzyl)phenyl]terephthalate, 1,3,5-tris[(3,5-di-tert-butyl-4-hydroxyphenyl) propionyloxyethyl] isocyanurate, 3,9-bis[1,1-dimethyl-2-{(3-tert-butyl-4-hydroxy-5-methylphenyl) propionyloxy}ethyl]-2,4,8,10-tetraoxaspiro [5.5]undecane and triethylene glycol bis [(3-tert-butyl-4-hydroxy-5-methylphenyl)propionate].

Preferred HP are commercialized with the trade marks Irganox® 1076, Irganox® 1010, 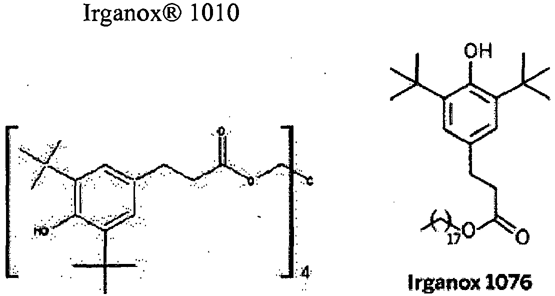 as well as Irganox® 3114 of Ciba, Ethanox® 330 of Albemarle and Topanol® Ca of Vertellus.

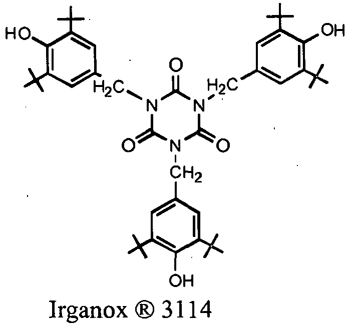

In the present description polymer additives (A) and (B) are sometimes called also "reactive additive" or "reactive polymer additive".

In the present description the term "reaction product of one or more dyes with one or more polymer additives" designates the product obtained by contacting one or more dyes with one or more polymer additives (A) and/or (B) above under reaction conditions at a temperature of at least 50°C, in the presence of water or in the substantial absence of water.

As it appears from the description above, any reactive polymer additive (A) and/or (B) contains at least one =O or -OH group. Although not wanting to be bound by any particular theory, it is believed that the organic dye molecule reacts at least with such =O and/or -OH group to form a stable reaction product.

Washing of the reaction product still yields a coloured composition, which shows that the dye is fixed or linked to the polymer additive. Also, thermogravimetric analysis (TGA) and Differential Scanning Calorimerty (DSC) have shown modifications of the thermal profile of the reaction product with respect to the thermal profile of the dye(s) and the additive(s). From these analyses it appears that such modifications are not attributable to a simple overlapping effect of the dye(s) and additive(s) thermal profiles, but to an actual modification of the dye molecule and the additive molecule, although the formula of such reaction product has not been determined.

A stable fixation of the dye on the polymer additive is shown also by an increased stability of the dye on the polymer to be coloured with respect to the poor fixation or no fixation obtained if the dye alone is mixed with the polymer or if additives other than the reactive additives according to the invention are mixed with the polymer. Lack of fixation or poor fixation causes migration of the dye, as it will be demonstrated in the Examples section of the present description.

Preferred weight ratio between said dye and said additive is from 0.05 to 500, more preferred between 1 and 100.

The colouring composition of the invention can be used to colour any thermoplastic polymer. It has been proven to be particularly advantageous to colour hydrophobic polymers such as polyolefins, which can be hardly coloured with conventional systems.

A large number of olefin polymers can thus be coloured. Examples of olefin polymers that can be coloured are:
- high-density polyethylenes (HDPEs having relative densities higher than 0.940) including ethylene homopolymers and ethylene copolymers with α-olefins having 3 to 12 carbon atoms;
- linear polyethylenes of low density (LLDPEs having relative densities lower than 0.940) and of very low density and ultra low density (VLDPEs and ULDPEs having relative densities lower than 0.920 down to 0.880) consisting of ethylene copolymers with one or more α-olefins having 3 to 12 carbon atoms;
- elastomeric terpolymers of ethylene and propylene with minor proportions of diene or elastomeric copolymers of ethylene and propylene with a content of units derived from ethylene of between about 30 and 70% by weight;
- isotactic polypropylene and crystalline copolymers of propylene and ethylene and/or other α-olefins having a content of units derived from propylene of more than 85% by weight;
- isotactic copolymers of propylene and α-olefins, such as 1-butene, with an α-olefin content of up to 30% by weight;
- impact-resistant propylene polymers obtained by sequential polymerisation of propylene and mixtures of propylene with ethylene containing up to 30% by weight of ethylene;
- atactic polypropylene and amorphous copolymers of propylene and ethylene and/or other α-olefins containing more than 70% by weight of units derived from propylene;
- polybutadiene and other polydiene rubbers;
- polymers and copolymers of styrene.

As said above, an aspect of the invention is that it has been surprisingly found that certain widely accepted and used polymer additives form a reaction product with a dye, therefore result in a colouring composition for thermoplastic polymers based on such accepted and valuable polymers additives. This allows to obtain an effective colouring composition without using dye carriers or other substances that do not perform any useful action on the polymer other than being a carrier for the dye. It will be in fact appreciated that:
- the aromatic phosphate metal salt (A) exhibits, alone or preferably in combination with a salt of a fatty acid, a nucleating effect or a crystallization promotion effect on thermoplastic polymers, in particularly polyolefins; and
- hindered phenol (B) are primary antioxidants for thermoplastic polymers.

According to a preferred embodiment, the colouring composition of the invention comprises also a salt of a C₈₋₃₀ fatty acid with a metal selected from the Groups 1-12, or from B, Al, Sn, Pb, Sb, Bi. Preferred metals are Li, Al and Zn.

Examples of fatty acids include capric acid, neodecanoic acid, undecanoic acid, lauric acid, tridecanoic acid, myristic acid, pentadecanoic acid, palmitic acid, margaric acid, stearic acid, nonadecanoic acid, arachidic acid, behenic acid, lignoceric acid, cerotic acid, montanic acid, melissic acid, obtusilic acid, linderic acid, tsuzuic acid, palmitoleic acid, petroselinic acid, oleic acid, elaidic acid, vaccenic acid, linoleic acid, linoelaidic acid, [gamma]-linolenic acid, linolenic acid, ricinoleic acid, 12-hydroxystearic acid, naphthenic acid and abietic acid.

Preferred fatty acids are stearic, myristic, palmitic.

Such salts of fatty aids are useful dispersants particularly for the aromatic phosphate metal salt (A).

Therefore the colouring composition of the invention is based on substances that play useful roles in polymer processing and are generally accepted by users and customers.

In one preferred embodiment the colouring composition comprises the product of reaction of a dye as defined above with an aromatic phosphate metal salt (A) and a hindered phenol (B). In one preferred embodiment the colouring composition comprises the product of reaction of a dye as defined above with an aromatic phosphate metal salt (A) and a hindered phenol (B). The process for preparing the colouring composition defined above comprises reacting a dye as defined above with one or more polymer additives belonging to the classes (A) and/or (B) in a water phase or in an essentially water-free phase at a temperature from 50°C to a temperature below the decomposition temperature of said dye.

When the process is carried out in the water phase, the polymer additive and the dye are dispersed in water or the dye may be solubilised in water, depending on the type of dye. The temperature is raised to at least 50°C but not above the decomposition temperature of the dye, which typically has a decomposition temperature lower than that of the polymer additive. A preferred temperature range is from 80° to 140°C, a more preferred range is 90° to 100°C. The suspension is then filtered and the solid reaction product is washed, collected and dried. When the process is carried out in the essentially water-free phase, the polymer additive and the dye in solid form are heated to a temperature that equal to or higher than the softening or melting temperature of the polymer additive. If more than one polymer additive is used, the temperature is selected in order to achieve the melting of one or more additives to an extent that provides a suitable viscosity of the mass for the process. The temperature must be lower than the decomposition temperature of the dye. These temperature conditions allow a mixing of the dye with the polymer additive in a molten mass or in a partially molten mass without substantially adding any liquid. Typically this is carried out in an extruder or other mixing apparatus such as a Banbury mixer. A suitable temperature range is from 50° to 250°C, preferably from 60°C to 170°C, but this depends on the type of additive and dye.

If appropriate the dry colouring composition is milled to a particle size suitable to achieve a free flowing, dustless, easy to process form.

In one embodiment the colouring composition of the invention is incorporated into a polymer masterbatch, preferably a masterbatch with the same polymer to be coloured.

The coloured masterbatch thus comprises one or more coloured compositions from the water phase or essentially water-free phase process, mixed with one or more polymer components. The coloured masterbatch may be a physical blend of one or more coloured compositions with the polymer prepared without heating the blend and without melting of any of the components. Any mixing equipment suitable to provide good blend homogeneity may be used.

However, it is preferred that the coloured masterbatch is prepared by melting, and especially partial melting of the components. Preparation by extrusion is particularly preferred. Optionally, other additives or fillers are added at this stage. For example, the basic coloured masterbatch may contain additives like optical brighteners, fillers and others, so that all the additives required by the polymer are contained in the masterbatch.

The polymer or polymers to be used are typically in the form of powder or of pellets. Pellets are preferred as they allow a better metering and dosing of the polymer as continuous feed.

The temperature of the material in the extruder should be suitable to provide a correct balance between the minimal required viscosity of the melt and its melt strength at the exit of the die. The temperature is such that all of the polymeric components have become sufficiently fluid to be processed and mixed in the extruder. For crystalline polymers this means that the temperature is above the melting temperature of the polymer.

The coloured masterbatch contains 1 - 99 wt% of coloured composition, preferably 5 - 70 wt%, more preferably 10 - 50 wt% of coloured composition.

When the colouring composition comprises the product of reaction of a dye with an aromatic phosphate metal salt (A) and a hindered phenol (B), the coloured masterbatch preferably comprises 4 - 60 wt% of (A), 4-60 wt% of (B), 0.01 - 60 wt% of dye, and 40 - 95 wt% of thermoplastic polymer. More preferably, the coloured masterbatch comprises 9 - 40 wt% of (A), 9 - 40 wt% of (B), 4 - 40 wt% of dye, and 60 - 95 wt% of thermoplastic polymer.

In one embodiment of the invention, the reaction between dye and one or more reactive additives (A) and/or (B) in the essentially water-free phase is carried out in the presence of the thermoplastic polymer of the masterbatch, namely the reaction between dye and reacting additive occurs directly during the preparation of the masterbatch. In this case the amount of polymer must be such that dye and reactive polymer additive are present at concentrations that allow contact and reaction. A very large amount of polymer may cause excessive dilution of dye and additive and limit the reaction, which would cause formation of a limited amount of reaction product. Therefore the masterbatch should not contain less than 1% of the sum of dye and reactive additive.

When a coloured masterbatch containing the colouring composition has been prepared, it is then mixed with the polymer to be coloured according to a suitable recipe to achieve the final colour desired for the polymer.

If no masterbatch is prepared and used, the colouring composition is added directly to the polymer at conditions that allow a dispersion and incorporation of the composition into the polymer. This is typically done in an extruder in which the polymer is melted, as described above in connection with the preparation of a masterbatch. Other additives may be added to the polymer, as required.

The use of a masterbatch is preferred since it allows fine and precise dosing and metering of the composition into the final polymer.

It has been found that the colouring composition of the invention allows to colour a polymer in an homogeneous and stable way, and at the same time introduce into the polymer the additives required for stabilizing and clarifying it.

In particular, nucleation and/or clarification of the polymer via use of reactive additive (A), optionally with a metal salt of a fatty acid, and colouring - or dyeing - the polymer are synergistically associated steps of the same colouring process. Therefore in one embodiment the present invention provides one composition that penetrates within the polymer and exerts the twofold function of nucleating/clarifying and dyeing.

The colouring composition of the invention is stable, does not migrate to the surface of the polymer and imparts good colour properties to the same.

The following colour properties of a thermoplastic polymer are described.

### Colour and Tinting Strength

The standard measurement for human perceived colour is CIE's L*a*b* colour space system, which defines the colour by the three parameters L*, a* and b*. Any colour is described by these three coordinates. A dark colour is characterized by a low value of L*, and a light colour by a high value of L*.

Tinting strength is also called strength of colour and refers to the ability of a colouring material to absorb the incident light and to impart colour to the medium in which the colouring material is included at a given concentration of a dye. Clearly tinting strength is related to the colouring behaviour of the colouring material. More specifically, the lower the concentration of colouring material needed to achieve a defined intensity of colour, the higher its tinting strength.

Tinting strength depends on the intensity of light absorption at different wavelengths by the colouring material, which is related to its chemical structure.

The colour of a thermoplastic polymer obtained by using the colouring composition of the invention in an amount of 0.5% by wt, measured by the method as described later, at a plaque thickness of 3 mm, typically has an L* value of 5 - 90, preferably 10 - 70, more preferably 15 - 60, for example 20 - 50.

The coloured polymers obtained by using the colouring composition of the invention in an amount of 0.5% by wt. have a value of (a*^{2+b}*²)^{0.5} which is typically higher than 10, preferably higher than 15, more preferably higher than 20.

A total colour difference is calculated from the differences in each of the three parameters as ΔE = (ΔL*² +Δa*² +Δb^{*2})^{0.5}.

### Colour light fastness

The light fastness of a coloured material is its ability to withstand exposure to light without undergoing fading or discolouration. Colour light fastness is determined by the chemical nature of the coloured material which by itself may show different levels of stability to the light exposure, by the strength of colour (e.g. by the concentration of colouring material in the matrix), by environmental conditions as moisture and temperature and by the type of light source (e.g. by the intensity and composition of wavelengths).

Other important factors which influence the colour light fastness are the thickness of the matrix layer and the type of the matrix.

Colour light fastness is generally determined by exposing the coloured material under an artificial light source in a testing chamber at defined conditions of humidity and temperature.

The colour of a thermoplastic polymer obtained by using the colouring composition of the invention in an amount of 0.5% by wt, measured by the method as described later, at a plaque thickness of 3 mm, typically has colour difference ΔE of the part exposed to the light versus the part not exposed of less than 15, preferably less than 10, more preferably less than 5 after 168 hours of exposure.

### Colour thermal stability

Colour thermal stability of a coloured material is the ability to withstand the heat that the coloured material is exposed to during the processing steps without fading or discolouring. Colour thermal stability is determined by the chemical nature of the colouring material which by itself may show different levels of stability to the heat, by the colour strength (concentration of the colouring matter), by the residence time, by the presence of oxygen and by the presence of moisture.

The standard method used to determine the thermal stability in the case of plastic applications is DIN 53772: A polymer composition containing a defined concentration of colouring material is injection moulded at the lowest possible temperature. Then following injection moulding tests are made at steps of increased temperature. Colourimetric analyses are performed on the plaques made at the different temperatures, for example using the well-established CIE L*a*b* system. The colour differences (ΔE) versus the value measured at the lowest temperature are calculated. Generally, a colour change ΔE of up to 10 is usually considered as acceptable colour thermal stability of the colouring material.

A thermoplastic polymer containing 0.5% wt of the colouring composition of the invention has a ΔE by the injection moulding method as described in examples at 260 °C of less than 10, preferably less than 7, more preferably less than 4. The ΔE by the compression moulding method as described in the examples at 30 minutes hold time is less than 8, preferably less than 5, more preferably less than 3.

### Colour loss by solvent extraction

When a liquid comes in contact with a polymer, part of the dye migrates out of the polymer phase to be extracted into the liquid phase. Some very polar substances, e.g. the polymer of wool fibres, may react chemically to anchor dyes. But for polymers without sufficient amount or suitable reactive groups, the migration and extraction of dyes remains a critical aspect. The rate of extraction and thereby loss of colour will depend on the effective mobility of the dye in the polymer phase and of the concentration and the solubility of the dye in polymer phase and liquid respectively. In some cases, there may be chemical reactions with the liquid that may influence extraction rate and colour. The rate of extraction and of colour loss increases with temperature.

Loss of colour by migration or extraction is usually measured by bringing the polymer into contact with standard solvents, e.g. water, at an elevated temperature when the polymer is still a solid. This is conveniently done at the normal boiling point of water (100 °C, hot water fastness test).

A thermoplastic polymer containing 0.5% wt of the colouring composition of the invention has a colour difference ΔE by the hot water fastness test as described in the examples of less than 20, preferably less than 12, more preferably less than 4.7.

### Clarity and haze

Optical clarity is usually an advantageous property of the final article that is often difficult to achieve with polymers. Addition of nucleating agents will improve clarity for many polymers, e.g. for polypropylene. Clarity is often quantified as haze, however haze is high when clarity is poor and vice versa. Haze is defined as the percentage of a light beam that in passing through a specimen deviates more than a certain angle from the centre of the beam.

Haze is reduced when thickness of the sample is decreased.

A thermoplastic polymer containing the colouring composition of the invention has a haze, measured on 1 mm thick plates as described in the examples, reduced by 10-20 points with respect to the same thermoplastic polymer without the colouring composition..

In order to provide a better understanding of the invention the following examples are reported which are given for illustrative purposes only and shall not be construed as limitative of the invention.

### EXAMPLES

The analytical tests and methods used are described in the following.

Melt flow rate: Melt flow rate (MFR), i.e. MFR₂, was measured according to ISO 1133 at 230°C and a load of 2.16 kg.

Comonomer content of polymer: it was determined in a known manner by FTIR measurements calibrated with C¹³NMR.

Injection moulding of plaques: Test plaques were injection moulded at the following conditions: Engel ES 330/65 injection moulder, clamping force 60 tons, screw diameter 35 mm, temperature 220°C (if not other conditions stated) and mould temperature 40°C.

DSC: Compression moulded films of thickness 0.2 mm were made and samples cut from these. DSC was measured on a Netzsch 204-F1 instrument. Melting temperature (Tm), crystallization temperature (Tc) and degree of crystallinity (Xc) were measured according to ISO 11357. Testing of films and the measurements were performed at the following conditions:

| Stage | Temperature Program | Heating/Cooling Rate | Hold time |
|---|---|---|---|
| | | (°C/min) | (min) |
| 1st heating | 20 - 225 °C | 10 | |
| Isothermal | 225 °C | | 5 |
| Cooling | 225 - 20 °C | 10 | |
| Isothermal | 20 °C | | 1 |
| 2^{nd} heating | 20 - 225 °C | 10 | |

The Tm and Xc values were determined from the second heating. The degree of crystallinity (Xc) was calculated using a melt enthalpy of 100% crystalline PP equal to 209 J/g.

Haze: Injection moulded plaques were made. Haze was measured on 1 mm thick plaques unless otherwise stated. Measurements were done by a BYK-Gardner haze-gard Plus instrument according to ASTM D1003.

Colour measurement: Injection moulding plaques were made. Haze was measured on 3 mm thick plaques unless otherwise stated. The colour was measured according to CIE 1976 L*a*b* colour space using ISO 7724 by a BYC-Gardner colour-guide sphere instrument, giving the L*, a* and b*coordinates. A white surface was used as background on the plaques.

Colour differences: The difference ΔE in colour measurements as a result of physical or chemical treatment was calculated according to ISO 7724/3 for total colour difference.

Colour thermal stability: Colour thermal stability was measured by two different methods, either by injection moulding at temperatures of 200 °C, 230 °C and 260 °C, or by compression moulding at 210 °C with holding times of 10, 20 and 30 minutes. The colour of the samples was measured and colour differences ΔE calculated with the 10 minutes sample as reference.

Colour light fastness. Injection moulded plaques at a thickness of 3 mm were used unless otherwise stated. The plaques were subjected to accelerated testing according to ISO 4892-2 by a xenon-arc Weather-Ometer (WOM), Ci65 (Atlas Electrical Device Co), and colour of plaques measured and differences calculated. The testing was done at the following conditions:

| | |
|---|---|
| Radiation spectrum | Filtered by window glass |
| Flux density | 550 W/m² (verified by automatic calibration at 340 nm) |
| Black panel temperature | 65 ± 3 °C |
| Relative humidity | 50 ± 5 % |
| Cycles: water spray/dry | 18 min/102 min |

Colour fastness to hot water: 3 mm thick injection moulded coloured plaques were immersed in boiling water at atmospheric pressure for a period of 2 hours. The L*, a* and b* values of the plaques values were measured before and after storage in boiling water, and the ΔE value calculated.

Extrusion compounding: Compounded blends were prepared by dry, room temperature mechanical mixing of the described composition batch for 3 minutes, followed by compounding in a Prism 22 mm double screw extruder fitted with a pelletizer to make pellets, at extrusion conditions:

| | |
|---|---|
| Set temperature | 230 °C |
| Nitrogen atmosphere at inlet | Yes |
| Speed | 300 rpm |
| Die pressure | 80 bar |

### General procedure

Some examples were made with pure dyes and other with commercial dyes. Since these latter are commercialized as formulations containing also other ingredients, in such cases the commercial dye was first treated in water to remove soluble components of the formulations that might interfere with the formation of a reaction product between dye and reactive additive.

### Reaction of dye and reactive additive in a water phase

10 g of commercial dye were added to 200 ml distilled water by continued mixing for 3 minutes at 80°C. Then the amount of additives as specified in Table 1 was added and the total mix was boiled for 2 hours with continued stirring, then filtered. The solids were washed with water at 15°C until the filtrate became clear and colourless. The filter cake was dried in an oven at 70°C for 24 hours to obtain a colouring composition.

Several colouring compositions were prepared with the same method, some of them without the reactive additives of the invention. These latter are designated as comparative examples. The comparative examples were carried out with no additive besides those already present in the commercial polymer, or with additives typically used in standard additive packages for polymers but not reacting with the dyes, therefore not suitable to form a colouring composition according to the invention.

The obtained mixture was cooled, ground, sieved and mixed with 3.5 kg of virgin (ex-reactor) random polypropylene (r-PP) of MFR 13, to which a standard stabilization package was then added. This mixture was extruded in a Prism 22 mm double screw extruder at the conditions described in the Table above (Extrusion Compounding), and coloured r-PP pellets were obtained. The amount of colouring composition (dye + reactive additive + other additive = Total Composition or TC) on the final coloured r-PP was 0,5% by wt.

All results are given in Table 1.

Examples 1-7 and 13-14 are according to the invention. Examples 8-12 are comparative examples.

### Dyes used:

Foron Brilliant Blue AS-BG 200, designated in Table 1 as Foron Blue.

Foron Yellow AS-3L, designated in Table 1 as Foron Yellow.

Foron Brilliant Red AS-5GL; designated in Table 1 as Foron Red.

The dyes above are anthraquinone dyes commercialized by Clariant.

The term "commercial dyes" designates dyes commercially available as a formulation or containing also other components beside the pure dye molecule. Typical other components include surfactants, dispersants and the like. The content of pure dye in the commercial dye is about 65% by wt. Washing of these commercial dyes to remove soluble non-dye components was done in examples 1, 2, 3 and 9-14.

### Reaction of dye and reactive additive in a water-free phase

Examples 4, 5, 6, 7 and 8 were carried out by using pure dyes instead of commercial dyes. The term "pure dyes" designates dyes without those ingredients that are typically present in commercial dyes. Example 9 was carried out with a commercial dye.

The following procedure was adopted:
15 g of pure dye (commercial dye in Ex. 9) and the amount of additives indicated in Table 1 were mixed in the molten phase at 130°C in a plastograph Rheocord 90 by Haake having the following characteristics:
   - type of mixing roller: general purpose
   - heating: electrical
   - mixing speed: 60 rpm
   - tested material: 50 g

The obtained mixture was cooled, ground, sieved and mixed with 15 kg of virgin random polypropylene (r-PP) of MFR 13 or virgin (ex-reactor) polypropylene homopolymer (homo-PP, MFR= 2-3) to which a standard stabilization package was then added. This mixture was then extruded in a TSA double screw extruder, model EM 21/30, diameter 21 mm., at 230°C, to obtain a coloured r-PP or homo-PP pellets. The amount of colouring composition (dye + additive dye + other additive = Total Composition or TC) on the final coloured r-PP or homo-PP was 0.67% by wt. In Examples 8 and 9 no additives were used and the amount of dye alone in the polymer was 0.1% by wt.

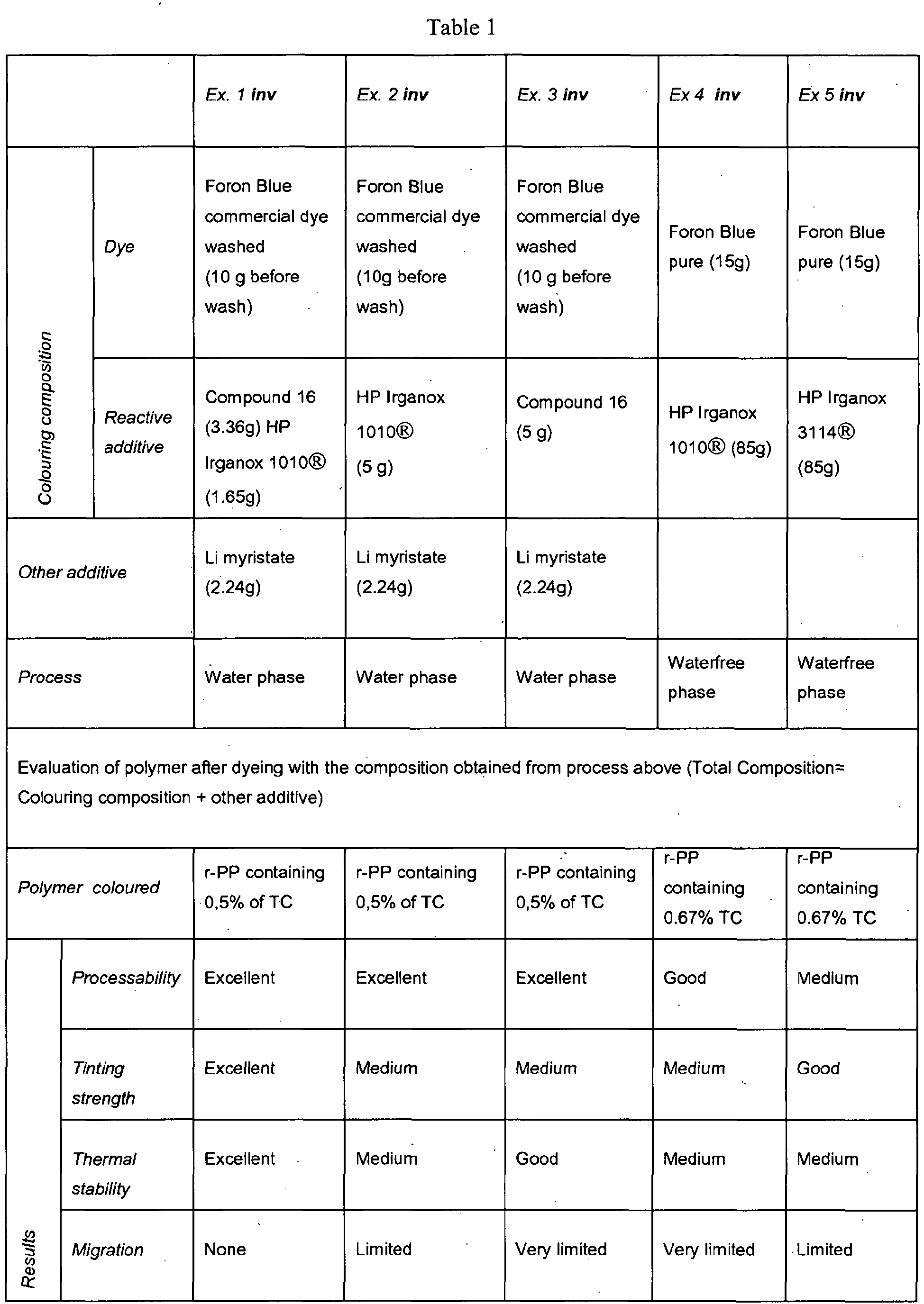

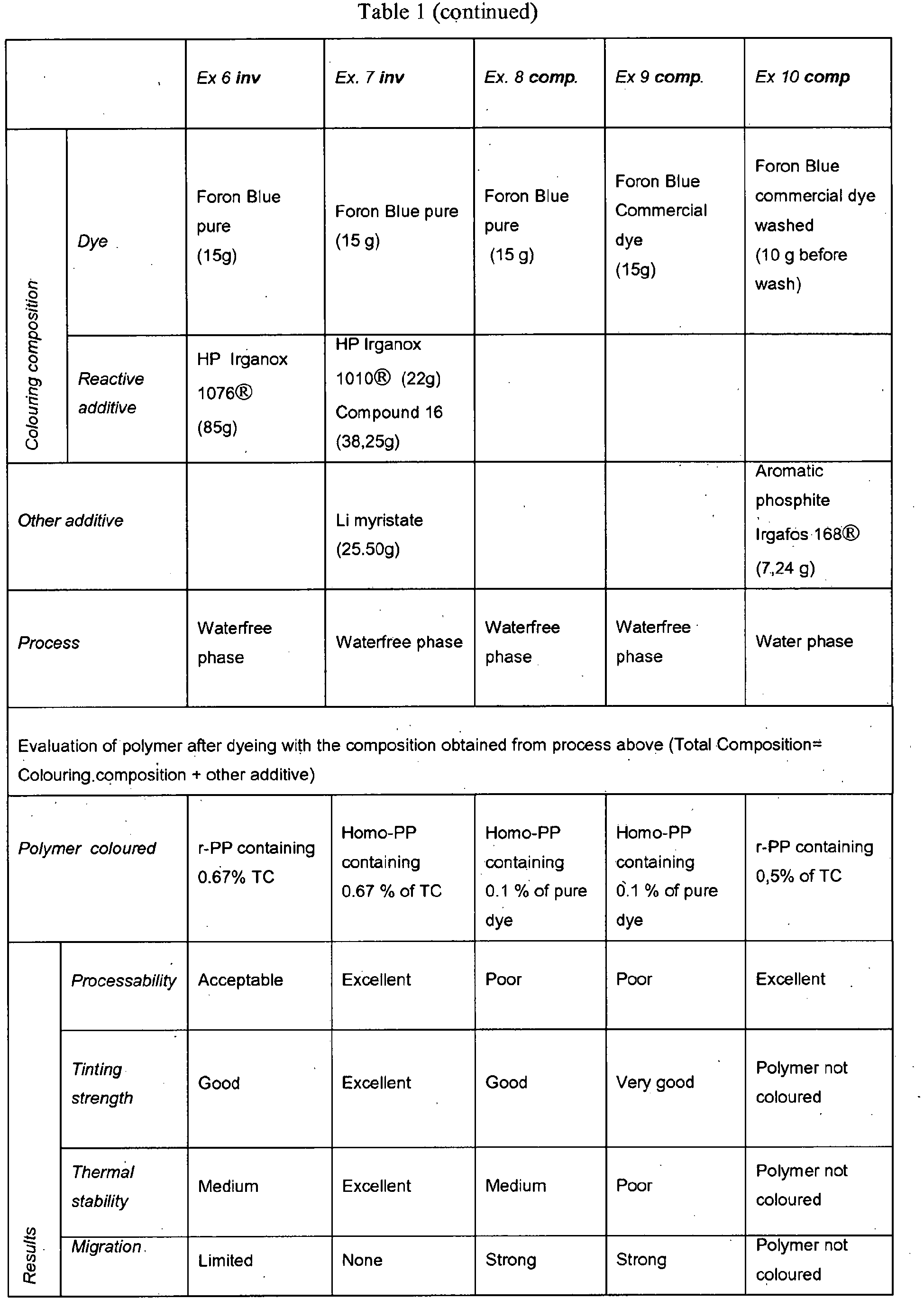

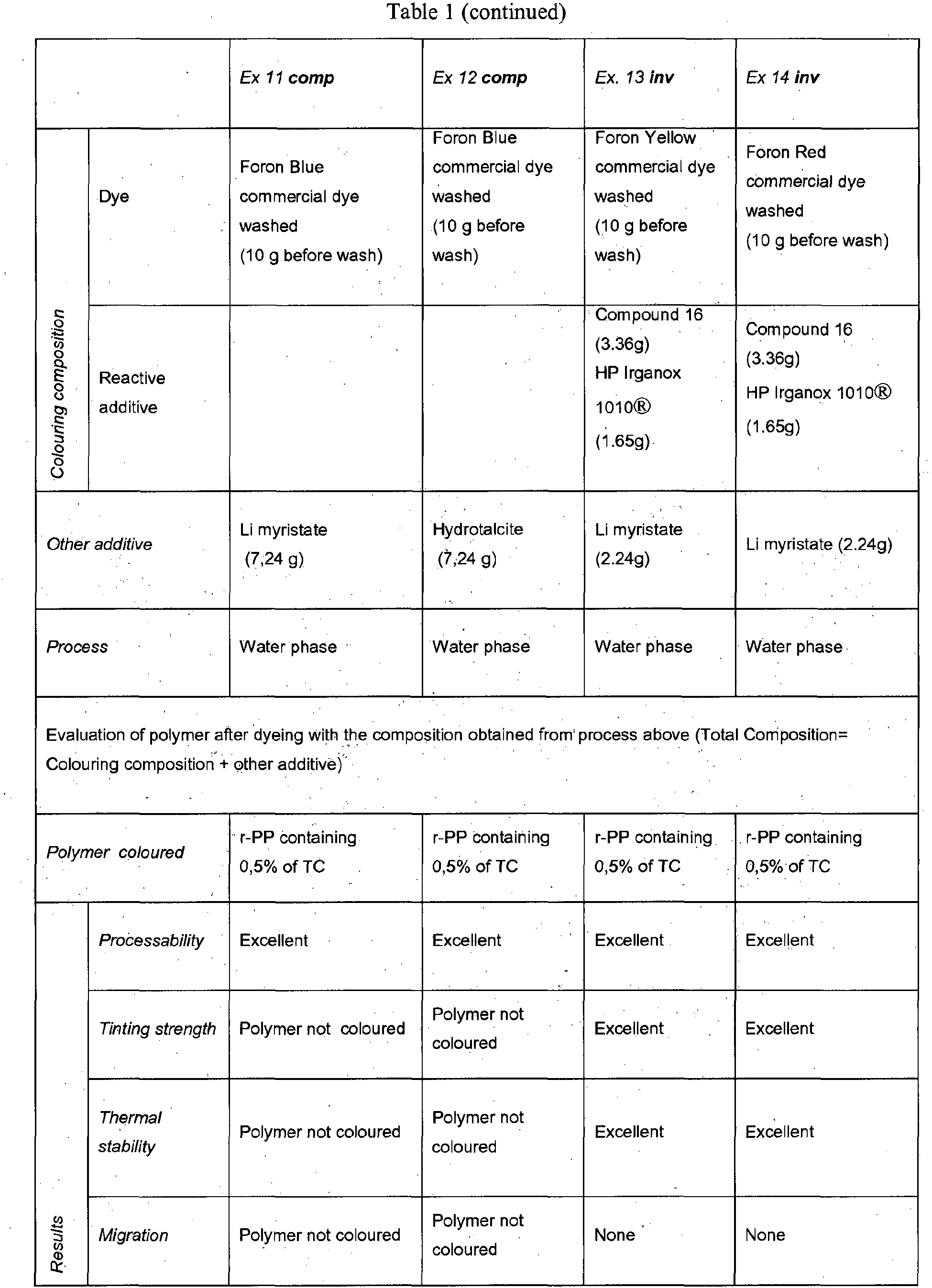

### Discussion of results

Example 1 shows that a combination of the aromatic phosphate metal salt having the formula of Compound 16 and of the multi-ring hindered phenol Irganox 1010® gave excellent results in terms of colour properties of the final polymer and processability. No migration of the colour was observed. Lithium myristate was added to the colouring composition to improve nucleation and clarity of the polymer. As shown by Comparative Example 11, lithium myristate alone did not react with the polymer, which maintained an excellent processability but was not coloured.

Example 2 shows that the multi-ring hindered phenol Irganox 1010® gave on balance good colour properties and limited migration.

Example 3 shows that the phosphate metal salt having the formula of Compound 16 gave on balance good colour properties and very limited migration.

Example 4 is similar to Example 2 but a pure dye was used in a waterfree process. On balance good colour properties were obtained and very limited migration.

Examples 5 and 6 were carried out with pure dyes and different hindered phenol in a waterfree process. On balance the results were good.

Comparative Example 8 was carried out without any additives and with a pure dye, in the waterfree process. On balance the results were poor. The tinting strength was good but colour migration was strong (which means that the colour was not fixed to the polymer) and processability of the polymer was poor.

The same holds true for Comparative Example 9, which was carried out with a commercial dye.

Comparative Example 10 was carried out with an aromatic phosphite (Irgafos 168® of Ciba), which is an additive acting as secondary antioxidant having the following formula:

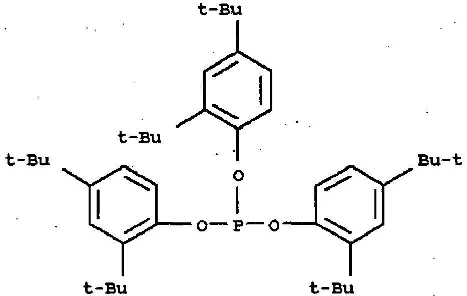

This additive is not a hindered phenol antioxidant and did not react with the polymer, which maintained an excellent processability but was not coloured.

Comparative Example 12 was carried out with hydrotalcite, an inorganic filler used for polymers. No reaction occurred with the polymer, which maintained an excellent processability but was not coloured.

Examples 13 and 14 shows that good results were obtained by using colouring compositions according to the invention also with yellow and red dyes.

### DSC Analysis

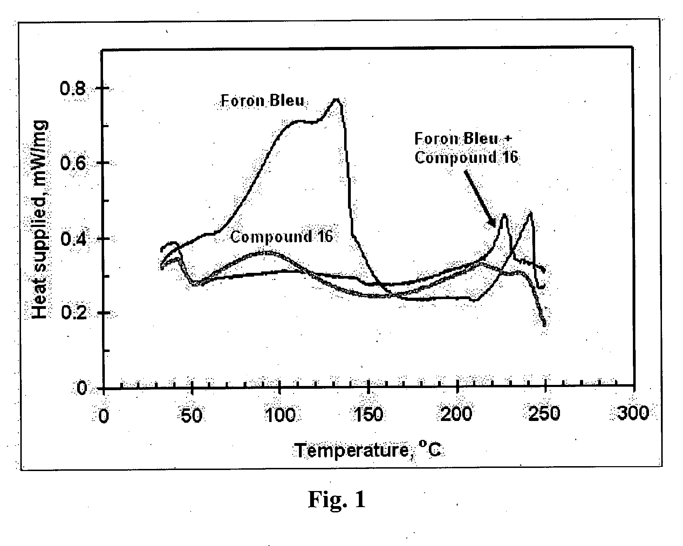

Fig. 1 is a DSC plot of the dye Foron Blue alone, of Compound 16 alone and of the product of reaction of these two compounds. The instrument used was a Netzsch 204-F1. A 8 mg sample of a mixture of dye and additive in powder form in a weight ratio 1:1 was used. Test conditions: the sample was heated from 20°C to 250°C at a heating rate of 10°C/min. The curve of the mixture dye + Compound 16 was not a blend of the two individual compounds and shows that a reaction occurred and a product of reaction was formed.

### TGA Analysis

TGA was carried out according to ISO11358.

TGA is a technique in which the mass of a specimen is measured as a function of temperature or time., while the test specimen is subjected to a controlled temperature program.

### Meaning of codes:

- B =: Foron Blue
- AO =: Irganox 1010®
- NA =: Compound 16
- B+AO =: 25% of B added to the melt of AO (75%) by mixing for 10 minutes before cooling and grinding
- B+NA:: Reaction at conditions of process in the water phase (1:1 weight ratio)
- B+AO+NA:: 1 part B + 1 part NA was pre-blended at room temperature before addition to the melt of AO (3 parts) then mixed for 15 min at 130°C before cooling and grinding
- Instrument:: Perkin Elmer TGA7
- Specimen type:: Powder
- Test conditions: Hold at 30°C 1min
- Heating: 30 to 450°C at 10°C/min
- Atmosphere :: Nitrogen
- Sample mass:: 8 mg. Onset is the point of intersection of the starting mass-line and the tangent to the TGA curve at the point of maximum gradient.
- Result:: Weight loss in% at Onset
Temperature at Onset
Weight loss at selected temperatures

| | Onset of decomposition °C | Weight loss @ onset Wt% | Weight loss @ 150°C Wt% | Weight loss @ 220°C Wt% |
|---|---|---|---|---|
| B | 173/287 | 6.1/8.6 | 5.5 | 6.7 |
| B+AO | 358 | 2.5 | 0.2 | 0.65 |
| B+NA | 336 | 3.8 | 1.7 | 2.7 |
| B+AO+NA | 367 | 2.4 | 0.2 | 0.65 |

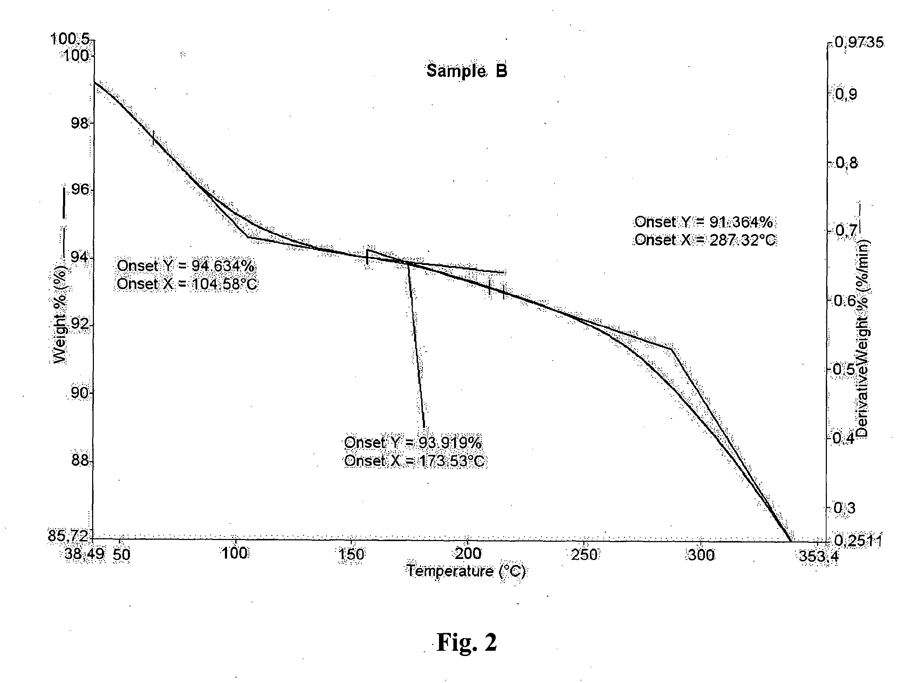

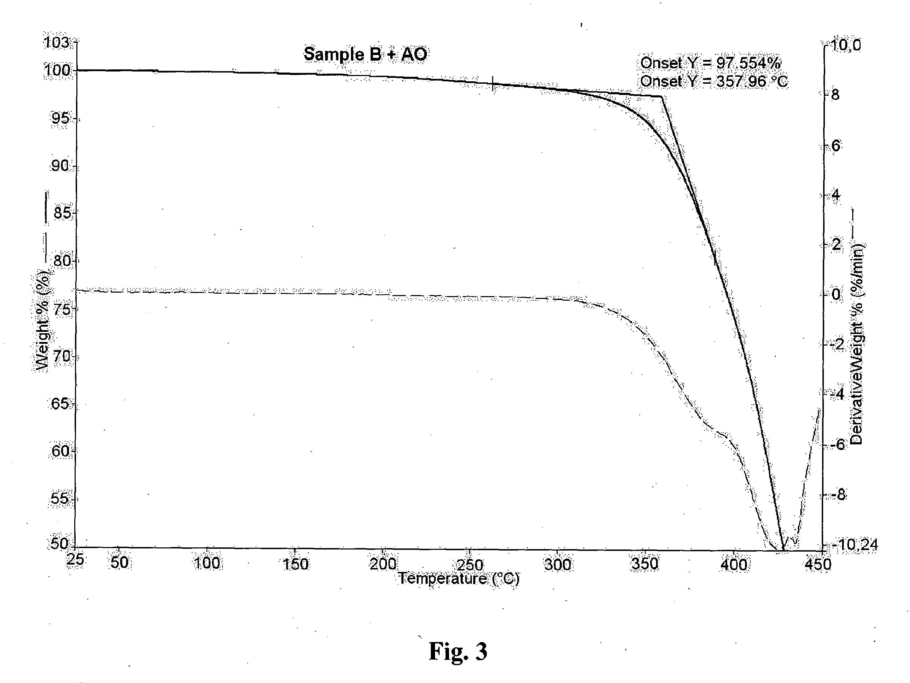

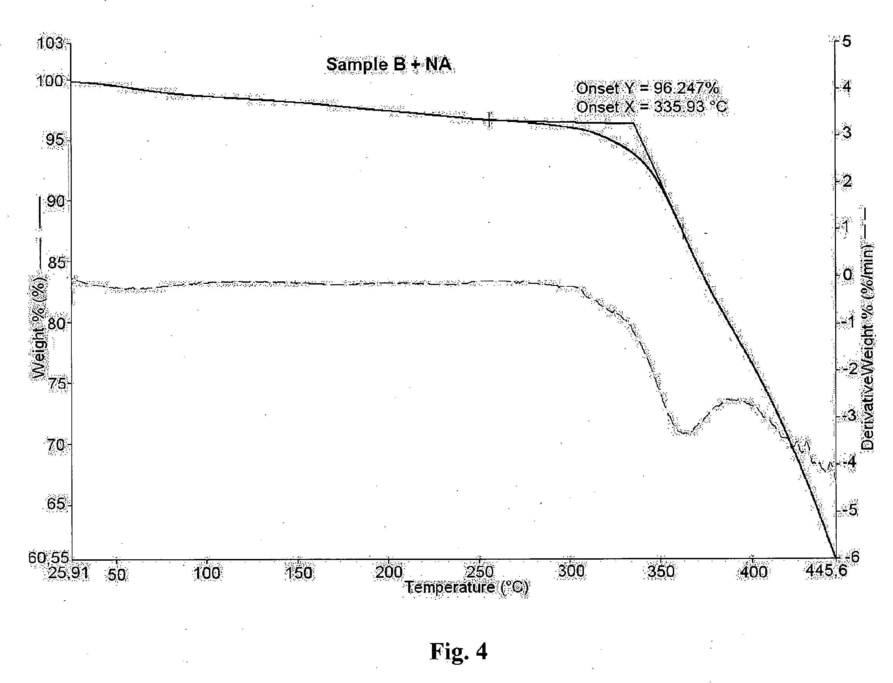

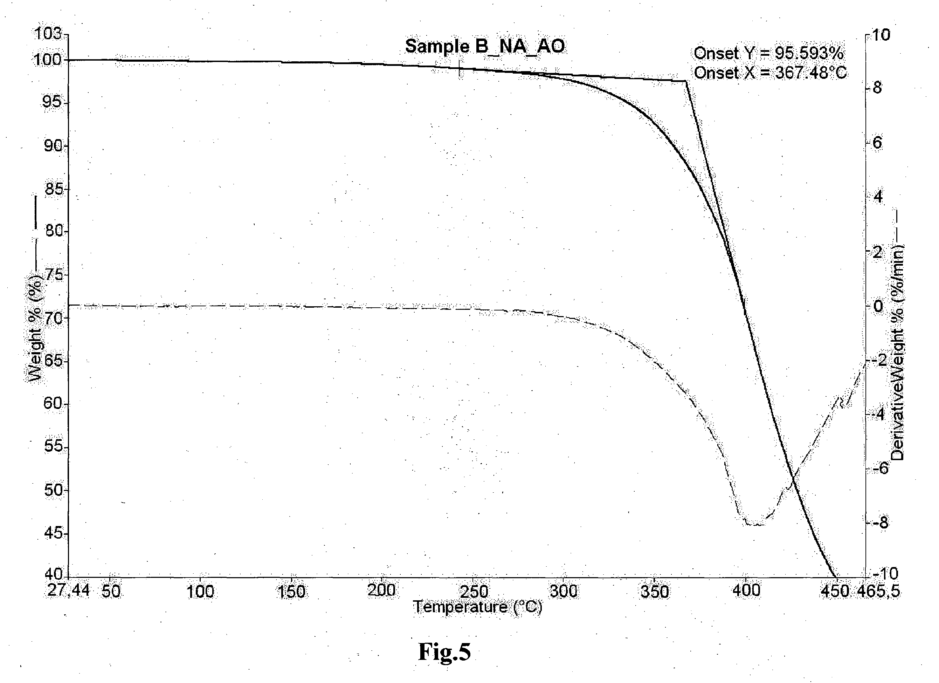

Figures 2-5 show the TGA curves of the samples above.

### Conclusions:

The TGA results indicate that reaction occurred in all the blends as none of the onsets seen in the pure B were seen in the blends. The highest onset of decomposition was in the B + AO + NA blend.

## Claims

1. Colouring composition for thermoplastic polymers **characterized by** comprising the reaction product of one or more dyes with one or more polymer additives, wherein said dye is an organic molecule containing at least one chromophore group, and said polymer additive is selected from one or more of the following classes:
(A) an aromatic phosphate metal salt of formula (I) 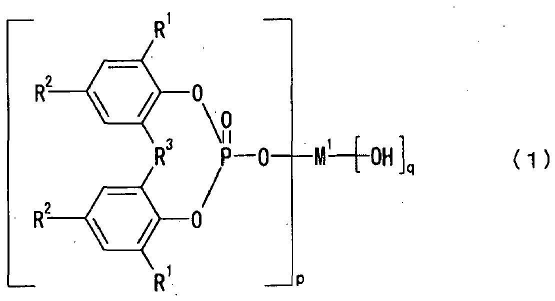 wherein:
R¹ is C₄₋₈ alkyl group;
R² is H or a C₁₋₈ alkyl group;
R³ is a C₁₋₄ alkylidene group;
M¹ is an alkaline metal atom and p is 1 and q is 0; or M¹ is an alkaline-earth-metal atom and p is 2 and q is 0; or M¹ is an aluminium atom and p is 1 or 2 and q is 3-p;.
(B) a hindered phenol antioxidant;
wherein the weight ratio between said dye and said additive is from 0.01 to 500.

2. Colouring composition according to claim 1, **characterized in that** said dye is selected from the group consisting of one or more of the following classes: anthraquinone, indigo, diaryl- or triarylmethane, azine, oxazine, thiazine, polymethine, quinophthalones, hydrazone, monoazo, disazo or polyazo, quinacridones, formazane, sulfur dyes, and azomethine.

3. Colouring composition according to any claims 1 - 2, **characterized in that** said dye is selected from the anthraquinone class of dyes is preferred.

4. Colouring composition according to any claims 1 - 3, **characterized by** comprising a salt of a C₈₋₃₀ fatty acid with a metal selected from the Groups 1-12, or from B, Al, Sn, Pb, Sb, Bi.

5. Colouring composition according to any of claims 1 - 4, **characterized by** comprising the reaction product of said dye with an aromatic phosphate metal salt of formula (I) and a hindered phenol antioxidant.

6. Colouring composition according to any of claims 1 - 5, **characterized by** comprising one or more additional polymer additives different from additives belonging to the classes (A) or (B), said additional additives being selected from antioxidants; nucleating agents, slip agents, antiblocking agents, antistatics.

7. Colouring composition according to claims 4 and 6, **characterized in that** said additive is an alkaline salt of a C₈₋₃₀ fatty acid.

8. Colouring composition according to claim 7, **characterized in that** said additive is an alkaline salt of a myristic acid.

9. Polymer masterbatch **characterized by** comprising from 1 to 99 wt% of the colouring composition according to any of the preceding claims.

10. Polymer masterbatch according to claim 9 **characterized by** comprising from 5 to 70 wt% of said colouring composition.

11. Process for preparing a colouring composition according to claim 1, **characterized by** reacting said dye with one or more of said polymer additives in an aqueous phase or in an essentially water-free phase at a temperature from 50°C to a temperature below the decomposition temperature of said dye.

12. Process according to claim 11, **characterized in that** said reaction is carried out in an aqueous medium and said product of reaction is then separated from said aqueous medium.

13. Process according to claim 11, **characterized in that** said reaction is carried out in an essentially water-free phase by heating said dye and said polymer additive at a temperature from 50° to 250°C, preferably from 60°C to 170°C under mixing conditions.

14. Process according to any claims 11-13, **characterized in that** said reaction is carried out in the presence of the thermoplastic polymer to be coloured.

15. Use of the colouring composition of any of claims 1-8 to colour a thermoplastic polymer.

## Patentansprüche

1. Färbezusammensetzung für thermoplastische Polymere, **dadurch gekennzeichnet, dass** sie das Umsetzungsprodukt eines oder mehrerer Farbstoffe mit einem oder mehreren Polymeradditiven umfasst, wobei der Farbstoff ein organisches Molekül ist, das mindestens eine chromophore Gruppe enthält, und das Polymeradditiv aus einer oder aus mehreren der folgenden Klassen ausgewählt ist:
(A) ein aromatisches Phosphatmetallsalz der Formel (I) 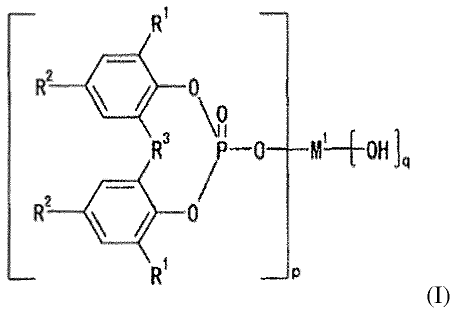 wobei:
R¹ eine C₄₋₈ Alkylgruppe ist;
R² H oder eine C₁₋₈ Alkylgruppe ist;
R³ eine C₁₋₄ Alkylidengruppe ist;
M¹ ein Alkalimetallatom ist und p 1 ist und q 0 ist; oder M¹ ein Erdalkalimetallatom ist und p 2 ist und q 0 ist; oder M¹ ein Aluminiumatom ist und p 1 oder 2 ist und q 3 bis p ist;
(B) ein gehindertes Phenol-Antioxidationsmittel;
wobei das Gewichtsverhältnis des Farbstoffs und des Additivs von 0,01 bis 500 reicht.

2. Färbezusammensetzung nach Anspruch 1, **dadurch gekennzeichnet, dass** der Farbstoff aus der Gruppe ausgewählt ist, die aus einer oder mehreren der folgenden Klassen besteht: Antrachinon, Indigo, Diaryl- oder Triarylmethan, Azin, Oxazin, Thiazin, Polymethin, Chiuinophthalone, Hydrazon, Monoazo, Disazo oder Polyazo, Chinacridone, Formazan, Schwefelfarbstoffe und Azomethin.

3. Färbezusammensetzung nach einem der Ansprüche 1 bis 2, **dadurch gekennzeichnet, dass** der aus der Antrachinonklasse der Farbstoffe ausgewählte Farbstoff bevorzugt ist.

4. Färbezusammensetzung nach einem der Ansprüche 1 bis 3, **dadurch gekennzeichnet, dass** sie ein Salz einer C₈₋₃₀ Fettsäure mit einem Metall umfasst, dass aus den Gruppen 1 bis 12 oder aus B, Al, Sn, Pb, Sb, Bi ausgewählt ist.

5. Färbezusammensetzung nach einem der Ansprüche 1 bis 4, **dadurch gekennzeichnet, dass** sie das Umsetzungsprodukt des Farbstoffs mit einem aromatischen Phosphatmetallsalz der Formel (I) und ein gehindertes Phenol-Antioxidationsmittel umfasst.

6. Färbezusammensetzung nach einem der Ansprüche 1 bis 5, **dadurch gekennzeichnet, dass** sie eines oder mehrere zusätzliche Polymeradditive umfasst, die sich von den zu den Klassen (A) oder (B) gehörenden Additiven unterscheiden, wobei die zusätzlichen Additive aus Antioxidantien, Keimbildnern, Gleitmitteln, Antihaftmitteln und Antistatika ausgewählt sind.

7. Färbezusammensetzung nach den Ansprüchen 4 und 6, **dadurch gekennzeichnet, dass** das Additiv ein Alkalisalz einer C₈₋₃₀ Fettsäure ist.

8. Färbezusammensetzung nach Anspruch 7, **dadurch gekennzeichnet, dass** das Additiv ein Alkalisalz einer Myristinsäure ist.

9. Polymervormischung, **dadurch gekennzeichnet, dass** sie von 1 bis 99 Gew.-% der Färbezusammensetzung nach einem der vorangegangenen Ansprüche umfasst.

10. Polymervormischung nach Anspruch 9, **dadurch gekennzeichnet, dass** sie von 5 bis 70 Gew.-% der Färbezusammensetzung umfasst.

11. Verfahren zum Herstellen einer Färbezusammensetzung nach Anspruch 1, **gekennzeichnet durch** Umsetzen des Farbstoffs mit einem oder mehreren der Polymeradditive in einer wässrigen Phase oder in einer im Wesentlichen wasserfreien Phase bei einer Temperatur von 50 °C bis zu einer Temperatur unterhalb der Zersetzungstemperatur des Farbstoffs.

12. Verfahren nach Anspruch 11, **dadurch gekennzeichnet, dass** die Umsetzung in einem wässrigen Medium durchgeführt wird und das Produkt der Umsetzung dann von dem wässrigen Medium getrennt wird.

13. Verfahren nach Anspruch 11, **dadurch gekennzeichnet, dass** die Umsetzung in einer im Wesentlichen wasserfreien Phase durch Erwärmen des Farbstoffs und des Polymeradditives bei einer Temperatur von 50 °C bis 250 °C, bevorzugt von 60 °C bis 170 °C unter Mischbedingungen durchgeführt wird.

14. Verfahren nach einem der Ansprüche 11 bis 13, **dadurch gekennzeichnet, dass** die Umsetzung in Gegenwart des zu färbenden thermoplastischen Polymers durchgeführt wird.

15. Verwendung der Färbezusammensetzung nach einem der Ansprüche 1 bis 8, um ein thermoplastisches Polymer zu färben.

## Revendications

1. Composition colorante pour polymères thermoplastiques, **caractérisé en ce qu'**elle comprend le produit de la réaction de un ou plusieurs colorants avec un ou plusieurs additifs polymères, dans lequel le ou lesdits colorants consistent en une molécule organique contenant au moins un groupe chromophore, et ledit additif polymère est choisi parmi un ou plusieurs des éléments des classes suivantes
(A) un sel métallique d'un phosphate aromatique de formule (I) 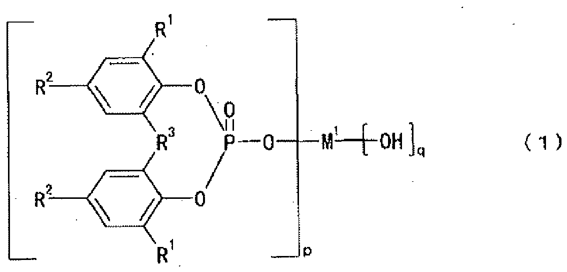 dans laquelle:
R¹ est un groupe alkyl en C₄₋₈;
R² est un atome d'hydrogène ou un groupe alkyle en C₁₋₈;
R³ est un groupe alkylkidène en C₁₋₄;
M¹ est soit un atome d'un métal alcalin et p est 1 et q est égal à 0;
soit un atome d'un métal alcalino-terreux et p est 2 et q est égal à 0;
soit un atome d'aluminium et p est 1 ou 2 et q est 3-p,
(B) un antioxydant de type phénol à encombrement stérique
dans laquelle composition colorante le rapport pondéral colorant/additif étant de 0,01 à 500.

2. Composition colorante selon la revendication 1, **caractérisée en ce que** ledit colorant est choisi dans le groupe constitué par une ou plusieurs des classes suivantes: anthraquinones, indigo, diaryl- ou triarylméthane, azines, oxazines, thiazines, polyméthines, quinophtalones, hydrazones, monoazoïques, disazoïques ou polyazoïques, quinacridones, formazane, colorants soufrés et azométhines.

3. Composition colorante selon une quelconque des revendications 1 ou 2, **caractérisée en ce que** ledit colorant est de préférence choisi dans la classe des colorants de type anthraquinone.

4. Composition colorante selon une quelconque des revendications 1 à 3, **caractérisée en ce qu'**elle comprend un sel d'un acide gras en C₈₋₃₀ et d'un métal sélectionné dans les groupes 1 à 12, ou sélectionné dans le groupe formé par B, Al, Sn, Pb, Sb, Bi.

5. Composition colorante selon l'une quelconque des revendications 1 à 4, **caractérisée en ce qu'**elle comprend le produit de réaction dudit colorant avec un sel métallique d'un phosphate aromatique de formule (I) avec un antioxydant de type phénol à empêchement stérique.

6. Composition colorante selon une quelconque des revendications 1 à 5, **caractérisé en ce qu'**il comprend un ou plusieurs additifs polymères additionnels différant des additifs appartenant aux classes (A) et (B), ces additifs additionnels étant sélectionnés parmi les antioxydants, les agents de nucléation, les agents de glissement, les agents antibloquants, les agents antistatiques.

7. Composition colorante selon les revendications 4 et 6, **caractérisée en ce que** ledit additif est un sel alcalin d'un acide gras en C₈₋₃₀.

8. Composition colorante selon la revendication 7, **caractérise en ce que** ledit additif est un sel alcalin d'un acide myristique.

9. Mélange maître polymère **caractérisé en ce qu'**il comprend de 1 à 99% en poids de la composition colorante selon l'une quelconque des revendications précédentes.

10. Mélange maître polymère selon la revendication 9, **caractérisé en ce qu'**il comprend de 5 à 70% en poids de ladite composition colorante.

11. Procédé de préparation d'une composition colorante selon la revendication 1, **caractérisé par** la réaction dudit colorant avec un ou plusieurs desdits additifs polymères dans une phase aqueuse ou dans une phase essentiellement exempte d'eau à une température comprise entre 50°C et une température inférieure à la température de décomposition dudit colorant.

12. Procédé selon la revendication 11, **caractérisé en ce que** ladite réaction est effectuée dans un milieu aqueux et **en ce que** ledit produit de réaction est ensuite séparé dudit milieu aqueux.

13. Procédé selon la revendications 11, **caractérisé en ce que** ladite réaction est effectuée dans une phase essentiellement exempte d'eau en chauffant ledit colorant et ledit additif polymère à une température de 50° à 250° C, de préférence de 60° C à 170° C, sous des conditions de mélange.

14. Procédé selon l'une quelconque des revendications 11 à 13, **caractérisé en ce que** ladite réaction est effectuée en présence du polymère thermoplastique à colorer.

15. Utilisation de la composition colorante selon l'une quelconque des revendications 1 à 8 pour colorer un polymère thermoplastique.
